# EUROPÄISCHE PATENTSCHRIFT

(11) **EP 1 405 712 B1**
(45) Veröffentlichungstag und Bekanntmachung des Hinweises auf die Patenterteilung: **21.07.2004**
(21) Anmeldenummer: 02022072.9
(22) Anmeldetag: 02.10.2002
(51) Int. Cl.: B29C 65/16, B23K 26/06

(54) **Verfahren und Vorrichtung zum Bearbeiten von Werkstücken mittels eines Laserstrahls**
Method and apparatus for processing articles with a laser beam
Procédé et dispositif pour traiter des pièces au moyen d'un rayon laser

(43) Veröffentlichungstag der Anmeldung: 07.04.2004
(73) Patentinhaber: Leister Process Technologies, 6060 Sarnen (CH)
(72) Erfinder: Niederberger, Adolf, 6056 Kägiswil (CH); Chen, Jie-Wei, 6055 Alpnach Dorf (CH)
(74) Vertreter: Klocke, Peter, Dipl.-Ing.

(56) Entgegenhaltungen:
- EP-A- 0 997 261

## Beschreibung

Die vorliegende Erfindung betrifft ein Verfahren zur Bearbeitung von Werkstoffen mittels eines Laserstrahls, wobei die Werkstücke fixiert und anschließend zumindest teilweise einem Laserstrahl ausgesetzt werden. Die Erfindung betrifft außerdem eine Vorrichtung zum Bearbeiten von Werkstücken mit einer Laserquelle, einer Auflage als untere Druckplatte für die Werkstücke und einer strahldurchlässigen oberen Platte auf den Werkstücken zum Fixieren der Werkstücke während der Bearbeitung als obere Druckplatte.

Diese Methode des Kunststoffschweißens mit Laserstrahl ist allgemein bekannt und wird auch als Durchstrahlschweißen bezeichnet. Für diese Kunststoffschweißmethode ist es wichtig, dass während des Schweißvorgangs die Werkstücke miteinander verspannt werden, da eine wichtige Voraussetzung für eine gute Schweißverbindung der Kunststoffe mittels Laserstrahlung nicht nur die Energiedosierung, sondern auch der saubere mechanische Kontakt zwischen den beiden miteinander zu verbindenden Fügeflächen ist. Hierzu sind verschiedene Verfahren und Vorrichtungen bekannt, die insbesondere bei flächigen Teilen eine ausreichende Anpresskraft ermöglichen.

Grundsätzlich ist es möglich diese Teile nicht nur miteinander zu verschweißen sondern auch sonstige Bearbeitungsvorgänge mittels eines Laserstrahls vorzunehmen, wie beispielsweise in der anhängigen europäischen Patentanmeldung 02 001 768.7 beschrieben.

Für die Bearbeitung mit der notwendigen Präzision ist es notwendig, dass Andruckdifferenzen und Bauteiltoleranzen zwischen der unter Druckplatte und der oberen Druckplatte und den dazwischenliegenden Werkstücken ausgeglichen werden, damit jedes Bauteil die gleichen Andrückbedingungen hat.

Der vorliegenden Erfindung liegt daher die Aufgabe zugrunde, hier eine Möglichkeit vorzuschlagen, mit der eine schnelle und rationelle Fertigung dieser hoch präzisen Teile möglich ist, wobei gleichzeitig ein Ausgleich der Andruckdifferenzen und Bauteiltoleranzen erfolgt.

Diese Aufgabe wird erfindungsgemäß durch ein Verfahren mit den Merkmalen des Anspruchs 1 sowie durch eine Vorrichtung mit den Merkmalen des unabhängigen Vorrichtungsanspruchs 9 gelöst. Weitere vorteilhafte Ausgestaltungen sind den jeweiligen rückbezogenen Unteransprüchen zu entnehmen.

Gemäß dem Verfahren werden in einem ersten Arbeitsschritt mehrere zu bearbeitende Werkstücke auf eine Auflage als untere Druckplatte mit zumindest in vertikaler Richtung beweglichen Auflagesegmenten aufgebracht. Hierzu werden die einzelnen Werkstücke jeweils auf die Auflagesegmente gelegt, so dass diese alle gleichzeitig positioniert sind und zumindest teilweise auch fixiert werden können. In dem nächsten Arbeitsschritt wird eine strahldurchlässige Platte, beispielsweise aus Glas, als obere Druckplatte mit den Werkstücken in Berührung gebracht. Dies kann je nach Ausgestaltung des erfindungsgemäßen Verfahrens nur durch Auflegen, d.h. bewegen der oberen Druckplatte auf das obere Werkstück, oder durch Heranbewegen der Werkstücke von unten an die obere Druckplatte erfolgen. Im Anschluss daran werden die untere und obere Druckplatte mit einem vorgegebenen Anpressdruck zusammengepresst. Dabei wird der Abstand der in vertikaler Richtung beweglichen Auflagesegmenten zu der oberen Platte variabel eingestellt, so dass die Toleranzen der Werkstücke ausgeglichen und trotzdem alle Werkstücke mit dem gleichen Anpressdruck beaufschlagt werden. Das Verspannen kann dabei derart erfolgen, dass entweder nur einzelne Auflagesegmente der unteren Druckplatte selektiv mit den gerade zu bearbeitenden Werkstücken zwischen der oberen Druckplatte und dem jeweiligen Auflagesegment gespannt und dem Laserstrahl ausgesetzt, oder alle Auflagesegmente gleichzeitig mit dem erforderlichen Anpressdruck beaufschlagt werden. Bei dem selektiven Anpressen erfolgt damit ein festes Andrücken der beiden Werkstücke nur dann und an den jeweiligen Werkstücken, die gerade von dem Laserstrahl überstrichen werden. Alle übrigen, auf der unteren Druckplatte befindlichen Werkstücke bleiben lediglich leicht vorgespannt und werden erst im Augenblick der Bearbeitung zwischen der oberen Druckplatte und dem jeweiligen Auflagesegment gepresst.

Dieses Verfahren hat den Vorteil, dass es für die Produktion von größeren Massen von Werkstücken geeignet ist. Beispielsweise kann die Bestückung durch ein austauschbares Magazin erfolgen wodurch die Produktionszeit reduziert wird. Durch die Spannung der einzelnen Teile können diese trotz möglichen Schwankungen in der Höhe der Werkstücke mit ausreichender Qualität hinsichtlich der Genauigkeit der Schweißnaht bearbeitet werden.

Gemäß einer weiteren vorteilhaften Ausbildung des Verfahrens werden einzelne Segmentbereiche der Auflageelemente mit einem entsprechend vorgebbaren Anpressdruck gegen die Werkstücke gepresst. Diese einzelnen Segmentbereiche können beispielsweise mechanisch, pneumatisch, hydraulisch, servomotorisch oder magnetisch durch einzelne Nadeln, Rollen, Stifte, Platten usw. definiert werden. Die Ausbildung dieser einzelnen Segmentbereiche richtet sich nach der Art der Anwendung und der zu verarbeitenden Werkstücke. Bei der Verwendung von einzelnen Auflageelementen, wie beispielsweise Nadel, können Teile zusammen gepresst werden, die auf der der unteren Druckplatte zugewandten Seite uneben, beispielsweise mit einer Kontur , ausgebildet sind.

Gemäß einer weiteren Ausbildung des Verfahrens wird das jeweilige Auflagesegment in vertikaler Richtung mit einem ersten Anpressdruck bis zur Berührung mit der oberen Druckplatte bewegt und gegen die obere Druckplatte gepresst und dann anschließend mit einem zweiten wesentlich höheren Anpressdruck während der Laserstrahlbearbeitung beaufschlagt wird. Selbstverständlich können auch mehrere Auflagesegmente gleichzeitig derart bewegt werden. Diese hat den Vorteil, dass dadurch der Austausch nach der Laserstrahlbearbeitung der unteren Platte durch eine zweite, bereits bestückte untere Platte konstruktiv einfach realisiert werden kann. Dieses Wechselmagazinverfahren erhöht den Fertigungsdurchsatz an einer Schweißvorrichtung erheblich.

Vorzugsweise wird dazu die untere Platte auf der Unterseite mit einem Druckluftanschluss versehen und auf einer Grundplatte mit einem Druckluftgegenstück angeordnet, und gegen die Grundplatte mit der Kraft, die durch den zweiten wesentlich höheren Anpressdruck gegen die obere Druckplatte erzeugt wird, gedrückt und damit die Druckluftverbindung abgedichtet.

Gemäß einer weiteren Ausbildung des Verfahrens wird zwischen die obere Druckplatte und die Werkstücke eine strahldurchlässige elastische Kunststofffolie als Ausgleichselement eingelegt. Damit können beim Zusammenpressen mögliche Andruckdifferenzen und Bauteiltoleranzen ausgeglichen werden. Das Einlegen einer derartigen Kunststofffolie kann zusätzlich bei beweglich gelagerten Auflagesegmenten oder auch bei einer starren unteren Druckplatte durchgeführt werden.

Die Vorrichtung zum Bearbeiten von Werkstücken weist eine untere Druckplatte mit mehreren in vertikaler Richtung relativ zu der unteren Druckplatte beweglich gelagerten Auflagesegmenten auf, deren Abstand zu der oberen Druckplatte bei gleichem Anpressdruck variabel einstellbar ist. Die Größe der Auflagesegmente kann im Wesentlichen der Größe der zu bearbeitenden bzw. zu verschweißenden Werkstücke entsprechen. Die Beweglichkeit kann durch eine federnde Lagerung bewirkt werden, so dass sich die einzelnen Auflagesegmente an eventuelle Fertigungstoleranzen anpassen können. Zur optimalen Anpassung an die Werkstückabmessungen können die einzelnen Auflagesegmente in vertikaler Richtung mittels der Druckerzeugungseinrichtung getrennt oder auch gruppenweise voneinander ansteuerbar und in vertikaler Richtung bewegbar ausgebildet sein. Es stellt sich damit bei jedem Werkstücksatz ein entsprechender Abstand zwischen den pressenden Teilen (Auflagesegment und obere Druckplatte) ein.

Gemäß einer weiteren Ausbildung weist die Vorrichtung Auflagesegmente auf, die einzelne in vertikale Richtung bewegliche Segmentbereiche aufweisen. Diese können wiederum durch kleinere Stifte, Spitzen, Rollen, Kolben mit entsprechender Auflagefläche oder dergleichen gebildet werden. Der Vorteil dieser Anordnung besteht darin, dass eine besonders auf den Anwendungsfall abgestimmte Anpassung realisiert werden kann.

Sofern ein Zusammenpressen der Werkstücke nur im Augenblick des Verschweißens erfolgt, stellt eine entsprechende Steuereinrichtung sicher, dass das jeweilige Auflagesegment, gerade die Werkstücke presst, auf die der Laserstrahl trifft.

Gemäß einer bevorzugten Ausbildung der erfindungsgemäßen Vorrichtung ist die untere Druckplatte als mit Druckluft beaufschlagbare Druckkammer mit einem oder mehreren in vertikaler Richtung beweglichen Werkstückauflagen, beispielsweise Kolben mit großer Auflagefläche, Stiften, Nadeln, ausgebildet. Die Werkstückauflagen können einzeln, getrennt voneinander ansteuerbar sein. Auch ist es möglich, dass die untere Druckplatte einzelne federnd gelagerte Werkstückauflagen aufweist und die Druckplatte in vertikaler Richtung bewegbar ist.

In einer weiteren Ausbildung Vorrichtung mit der unteren Druckplatte als Druckkammer, vorzugsweise für Druckluft, sind mindestens zwei derartige untere Platten vorgesehen sind, die abwechselnd mit der oberen Platte als Wechselmagazin in Druckkontakt bringbar sind. Vorzugsweise weist die untere Platte auf der Unterseite eine Druckluftöffnung auf, die mit einer entsprechenden Druckluftöffnung in einer darunter angeordneten Druckplatte fluchtet.

Vorteilhafterweise ist die Druckluftöffnung in der unteren Platte als eine Durchgangsbohrung und die Druckluftöffnung in der Grundplatte als Bohrung mit einem Ansenkung zur Aufnahme einer Dichtung ausgebildet. Dies erlaubt eine besonders einfache Abdichtung ohne zusätzliche Schläuche oder Ventile. Die in der Ansenkung angeordnete Dichtung wird durch das Gewicht der unteren Platte zusammengepresst und dichtet damit bei geringem Druck ab. Dieser Druck reicht aber aus, die in vertikaler Richtung beweglichen Auflagesegmente gegen die obere Druckplatte zu bewegen. Bei dem anschließenden erhöhten Anpressdruck wird die unter Druckplatte mit eben diesem erhöhten Anpressdruck gegen die Grundplatte gedrückt, so dass damit auch eine erhöhte Abdichtung gewährleistet wird.

Nachfolgend wird die Erfindung anhand von Ausführungsbeispielen in Verbindung mit den begleitenden Zeichnungen näher erläutert. Es stellen dar:
- Figur 1: die schematische und prinzipielle Anordnung mit beweglichen Auflagesegmenten in einer Schnittdarstellung,
- Figur 2: die perspektivische Draufsicht auf eine untere Druckplatte mit Auflagesegmenten und einzelnen Segmentbereichen,
- Figur 3: eine Ausführungsform mit einer starren unteren Druckplatte und einer zusätzlichen Folie zwischen der oberen Druckplatte und den Werkstücken
- Figur 4: eine Funktionsprinzipskizze mit einer unteren Druckplatte mit Druckluftkammer,
- Figur 5: die untere Druckplatte mit Druckluftkammer mit zwei Auflagesegmenten als Werkstückaufnahme in perspektivischer Ansicht und in einer Schnittdarstellung,
- Figur 6: die Schnittdarstellung einer unteren Druckplatte auf einer Grundplatte mit Druckluftanschluss für Wechselmagazin; und
- Figur 7: eine schematische perspektivische Darstellung der unteren Druckplatte mit Stiften und im Schnitt mit Werkstücken und oberer Druckplatte.

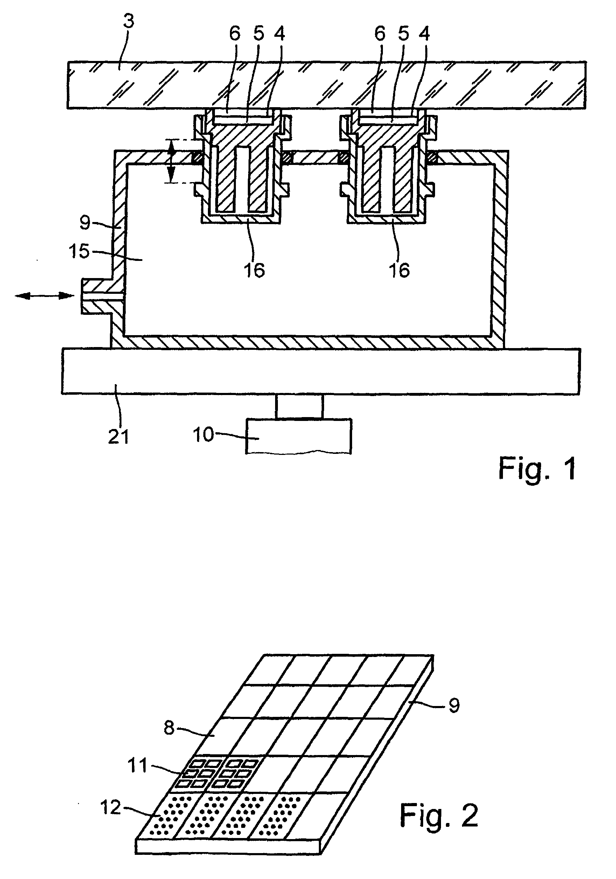

Figur 1 zeigt eine obere Druckplatte 3 aus Quarzglas auf den Werkstücke 4 und 5, wobei das obere Werkstück 4 und die obere Druckplatte 3 für einen nicht dargestellten Laserstrahl einer Laserquelle durchlässig ist. Der Laserstrahl 2 wird in bekannter Art und Weise mittels geeigneten optischen Mitteln in bekannter Art und Weise so geformt, dass er senkrecht über dem zu bearbeitenden Bereich steht und über diesen bewegt wird. Dies kann durch entsprechende Umlenkspiegel, Bewegung der Laserquelle selbst oder des Auflagetisches erfolgen. Der Laserstrahl gelangt durch die obere Druckplatte 3 und das obere Werkstück 4, so dass der Laserstrahl in dem Fügbereich 6 zwischen den beiden Werkstücken das Material erwärmt und damit bei diesem Ausführungsbeispiel eine Verschweißung der beiden Werkstücke 4 und 5 bewirkt. Um die verschweißenden Bereiche zu selektieren, kann sich auf der oberen Druckplatte 3 eine entsprechende Maske befinden. Die beiden Werkstücke 4 und 5 sind auf Auflagesegmenten 8 einer unteren Druckplatte 9 angeordnet. Sowohl die obere Druckplatte als auch die untere Druckplatte können beispielsweise durch eine übliche Kolben/Zylinderanordnung hydraulisch oder pneumatisch bewegt werden. Im vorliegenden Ausführungsbeispiel ist die obere Druckplatte 3 als fest, während die untere Druckplatte 9 nach dem Anordnen der Werkstücke 4, 5 auf den jeweiligen Auflagesegmenten 8, wie in der Figur dargestellt, mit einem festgelegten Haltedruck die Oberseiten der oberen Werkstücke 4 gegen die obere Druckplatte drückt. Die in der unteren Druckplatte 9 beweglich gelagerten Auflagesegmente 8 sind ebenfalls beispielsweise über eine übliche Kolben/Zylinderanordnung, allgemein als Druckerzeugungseinrichtung 10 bezeichnet, in vertikaler Richtung pneumatisch betätigbar.

Je nach Ausbildung kann die Druckerzeugungseinrichtung dabei bei Bedarf so gesteuert werden, dass nur das Auflagesegment 8 mit entsprechendem höheren Anpressdruck als die übrigen anderen Auflagesegmente 8', 8" beaufschlagt wird, auf das gerade der Laserstrahl 2 trifft. Sobald der Laserstrahl 2 zu dem nächsten Auflagesegment 8' verfährt, wird das Auflagesegment 8 entspannt und entsprechend das Auflagesegment 8' mit erhöhtem Druck beaufschlagt. Damit ist bei diesem Ausführungsbeispiel gewährleistet, dass die Werkstücke nur für den Augenblick der Bearbeitung einem erhöhten Anpressdruck ausgesetzt sind, der beispielsweise für die Qualitätsanforderungen bei Mikro- und Nanostrukturen im Augenblick der Bearbeitung notwendig ist, damit eine dimensionsgenaue und exakte Bearbeitung nicht möglich ist. Im Ausführungsbeispiel gemäß Figur 1 werden die Auflagesegmente 8', 8" mit Druckluft beaufschlagt, nach dem die untere Druckplatte 9 über eine Druckerzeugungseinrichtung 10 in die Nähe der oberen Druckplatte 3 gebracht wurde. Über die Druckkammer 15 werden die einzelnen Druckkolben 16 der Auflagesegmente 8', 8" in vertikaler Richtung bewegt und können sich an verschieden Dicken der Werkstücke 4, 5 anpassen, wobei der Anpressdruck für alle gleich ist. Eine gesteuerte Selektion einzelner Auflagesegment findet hier nicht statt.

Figur 2 zeigt die perspektivische Ansicht einer unteren Druckplatte 9 mit einzelnen Auflagesegmenten 8, bei denen die Auflagesegmente nicht wie in der Figur 1 dargestellt, eine flächige Auflage bilden, sondern stattdessen nur eine punktuelle. Dies kann durch einzelne Segmentbereiche, d. h. kleinere, flächige Auflagen 11 oder punktuell mittels Stiften oder Nadeln 12 erfolgen. Die flächigen Segmentbereiche 11 können auch durch Rollen oder andere geeignete Elemente realisiert werden, wobei bei der Ausführungsform gemäß dieser Figur die einzelnen Segmentbereiche, seien sie in flächiger Form (Bezugsziffer 11) oder als Stifte oder Nadeln 12, ebenfalls individuell mit einem Anpressdruck beaufschlagt werden können. Dies kann mittels Druckkammern 15, wie in der Figur 1 dargestellt, erfolgen, die jedoch zu einzelnen Segmentbereichen 11 getrennt ansteuerbar sind.

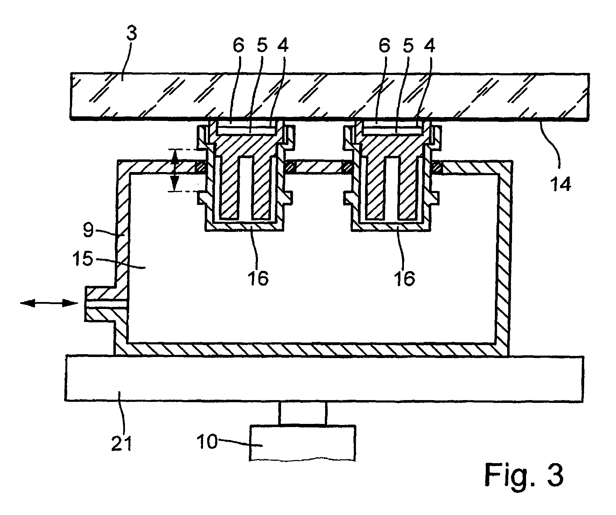

In dem Ausführungsbeispiel gemäß Figur 3 wird zwischen der oberen Druckplatte 3 und der Oberseite der Werkstücke 4 eine für den Laserstrahl durchlässige Folie 14 mit einer Stärke von ca. 0,2 bis 1 mm eingelegt, über die nach dem festen Zusammenpressen der Werkstücke 4, 5 zwischen der oberen Druckplatte 3 ein Toleranz- und Druckausgleich erreicht wird, so dass auf alle Werkstücke der bei der Bearbeitung erforderliche Anpressdruck wirken kann. Damit kann unter Umständen der Ausgleich über die in Figur 1 und 3 dargestellten in vertikaler Richtung beweglichen Auflagesegmente gespart werden. In der Figur wurde die Folie 14 trotz beweglicher Auflagesegmente, wie in Figur 1 erläutert, zusätzlich verwendet.

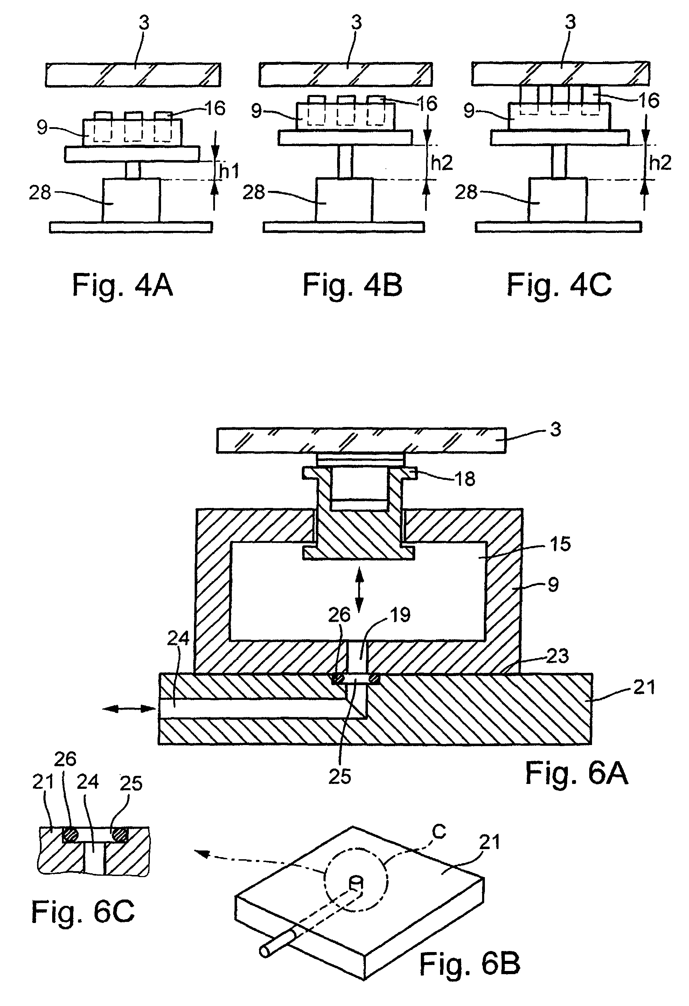

Figur 4 zeigt drei verschiedene Betriebszustände einer Vorrichtung mit einer unteren Druckplatte 9 mit einer Druckkammer 15. Die Druckkammer 15 weist beispielhaft drei in vertikaler Richtung in die Druckkammer hineinragende Druckkolben 16 auf, deren obere Stirnseite 17 als Werkstückauflage dient. Die Druckplatte 9 wiederum wird mittels eines Zylinders 28 in vertikaler Richtung bewegt, wobei dieser, wie in der Figur gezeigt, in vertikaler Richtung den größeren Hub hat. In der Figur sind keine Werkstücke gezeigt. Figur 4A zeigt die Anordnung in Ruhestellung mit der Höhe h1. In der Figur 4B wurde der Zylinder 28 mit Druck, pneumatisch oder hydraulisch, beaufschlagt, so dass die untere Druckplatte 9 bereits nahe an die obere Druckplatte 3 auf die Höhe h2 bewegt wird. In der Figur 4C wird dann die Druckkammer 15 mit Druck beaufschlagt und die Druckkolben 16 aus der Druckkammer 15 in vertikaler Richtung bewegt. Der Hub der Druckkolben 16 richtet sich individuell nach der Dicke der auf der Stirnseite 17 aufliegenden Werkstücke. Damit können Werkstücktoleranzen ausgeglichen werden, so dass immer der erforderte Anpressdruck gewährleistet ist.

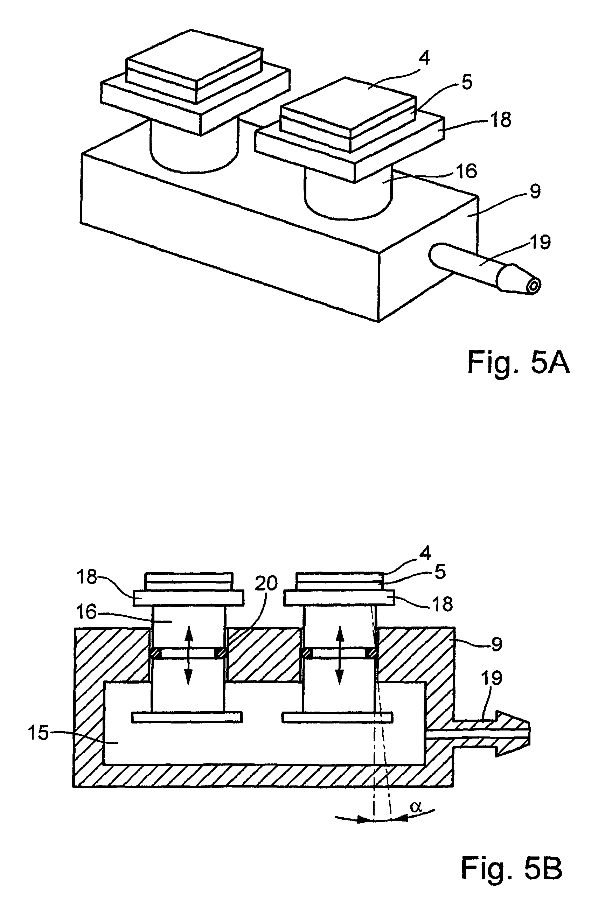

Figur 5 zeigt in vergrößerter Darstellung in perspektivischer Darstellung (Figur 5A) und in einer Schnittdarstellung (Figur 5B) nur die untere Druckplatte 9 mit der Druckkammer 15 und zwei Druckkolben 16 auf denen eine Werkstückaufnahme 18 auf der Stirnseite 17 angeordnet ist. Auf der Werkstückaufnahme 18 befinden sich die zu verschweißenden Werkstücke 4, 5. Seitlich befindet sich in diesem Beispiel ein Druckluftanschluss 19. In der Figur 5B ist ersichtlich, dass die Druckkolben 16 in der Druckkammer 15 über Dichtungen 20 derart geführt sind, dass auch eine geringe Winkelanpassung möglich ist.

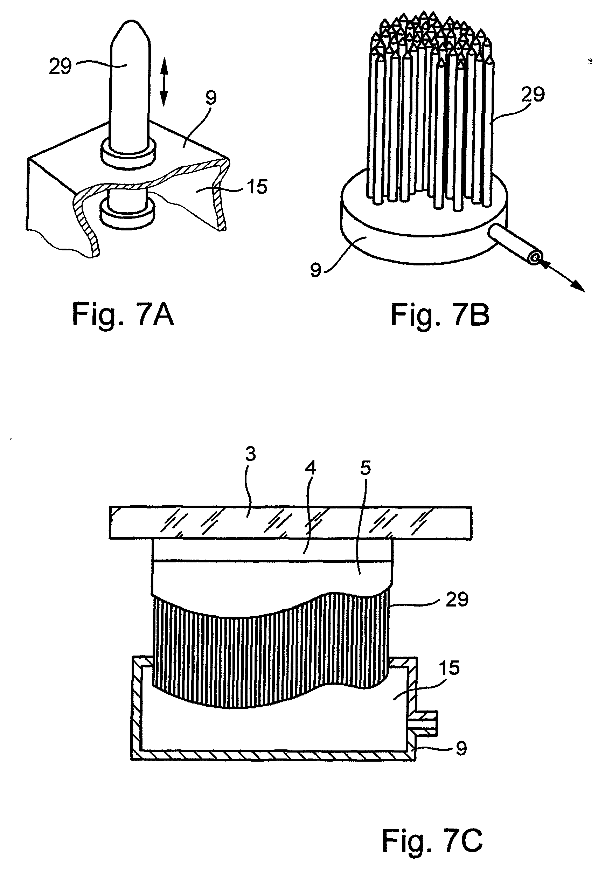

Figur 6A zeigt die Druckplatte 9 auf einer Grundplatte 21 in einer anderen Ausgestaltung im Querschnitt. In Figur 6B ist die Grundplatte 21 in perspektivischer Ansicht und Figur 6C die Einzelheit C vergrößert im Schnitt dargestellt. Die untere Druckplatte 9 weist wieder eine Druckkammer 15 mit Druckkolben 16 auf, der eine Werkstückaufnahme 18 trägt. Auf dieser befinden sich die Werkstücke 4, 5, die gegen die transparente obere Druckplatte 3 gedrückt werden. Die untere Druckplatte 9 weist eine Durchgangsbohrung 22 zu der Druckkammer 14 auf und liegt mit der flachen Unterseite 23 auf der Grundplatte 21 auf. Diese weist einen Druckluftkanal 24 auf, der auf der Oberseite in eine zylindrische Ansenkung 25 mündet. Diese dient, wie in den Figuren 6B und 6C dargestellt, der Aufnahme eines Dichtringes 26. Dieser dichtet die aufeinander liegenden Flächen der unteren Druckplatte 9 und der Grundplatte 21 gegeneinander ab.

Diese Anordnung erlaubt in höchst vorteilhafter und gleichzeitig einfacher Art und Weise die Verwendung von mehreren unteren Grundplatten 9 als Werkstückmagazine, die gegenseitig ausgetauscht und dabei sofort an die Drucklufterzeugungseinrichtung angeschlossen werden.

Figur 7 schließlich zeigt die Auflagesegmente in Form von Stiften 29, die einzeln in der Druckkammer 15 in vertikaler Richtung beweglich geführt sind und - wie vorstehend schon erläutert - ebenfalls mit Druckluft beaufschlagbar sind. Figur 7A zeigt einen einzelnen Stift 29, Figur 7B die untere Druckplatte 9 mit einer Vielzahl von Stiften 29 und die Figur 7C in einer Schnittdarstellung die Anordnung der Stifte bei einem unteren Werkstück 5 mit einer Kontur auf der den Stiften 29 zugewandten Seite. Damit können auch Werkstücke mit einer strukturierten Oberfläche auf einer Seite exakt zusammengepresst werden.

## Patentansprüche

1. Verfahren zum Bearbeiten von Werkstücken mittels eines Laserstrahls, wobei die Werkstücke fixiert und anschließend zumindest teilweise einem Laserstrahl ausgesetzt werden, **dadurch gekennzeichnet, dass**
in einem ersten Arbeitsschritt mehrere zu bearbeitende Werkstücke (4, 5) auf einer unteren Druckplatte (9) mit in vertikaler Richtung beweglichen Auflagesegmenten (8) aufgebracht werden,
in dem zweiten Arbeitsschritt die Oberseite der Werkstücke (4) mit einer strahldurchlässigen Platte als obere Druckplatte (3) in Berührung gebracht werden,
die untere und obere Druckplatte mit einem vorgegeben Anpressdruck zusammengepresst werden, wobei der Abstand zwischen der Auflagesegmente (8) zu der oberen Platte variabel einstellt wird,
anschließend die zu bearbeitenden Werkstücke (4, 5) zwischen der oberen Druckplatte (3) und der unteren Druckplatte (9) dem Laserstrahl (2) durch die obere Druckplatte (3) hindurch ausgesetzt werden.

2. Verfahren nach Anspruch 1, **dadurch gekennzeichnet, dass** die Werkstückauflagen selektiv gegen die obere Platte gedrückt und nur diese dem Laserstrahl (2) ausgesetzt werden.

3. Verfahren nach Anspruch einem der vorangegangenen Ansprüche, **dadurch gekennzeichnet, dass** das jeweilige Auflagesegment (8, 8', 8") in vertikaler Richtung entsprechend dem gewünschten Anpressdruck gegen die Werkstücke (4, 5) gepresst wird.

4. Verfahren nach Anspruch einem der vorangegangenen Ansprüche, **dadurch gekennzeichnet, dass** Auflagesegmente mit einzelnen in vertikaler Richtung beweglichen Segmentbereichen (11, 12) verwendet werden, die entsprechend einem vorgebbaren Anpressdruck gegen die Werkstücke (4, 5) gepresst werden.

5. Verfahren nach Anspruch einem der vorangegangenen Ansprüche, **dadurch gekennzeichnet, dass** das jeweilige Auflagesegment (8, 8', 8") in vertikaler Richtung mit einem ersten Anpressdruck bis zur Berührung mit der oberen Druckplatte (3) bewegt und gegen die obere Druckplatte (3) gepresst und dann anschließend mit einem zweiten wesentlich höheren Anpressdruck während der Laserstrahlbearbeitung beaufschlagt wird.

6. Verfahren nach Anspruch einem der vorangegangenen Ansprüche, **dadurch gekennzeichnet, dass** nach der Laserstrahlbearbeitung die untere Platte durch eine zweite, bereits bestückte untere Platte ausgetauscht wird.

7. Verfahren nach Anspruch 5 und 6, **dadurch gekennzeichnet, dass** die untere Platte auf der Unterseite mit einem Druckluftanschluss versehen ist und auf einer Grundplatte mit einem Druckluftgegenstück angeordnet wird, und gegenüber der Grundplatte mit der Kraft, die durch den zweiten wesentlich höheren Anpressdruck gegen die obere Druckplatte (3) erzeugt wird, gedrückt und damit die Druckluftverbindung abgedichtet wird.

8. Verfahren nach Anspruch einem der vorangegangenen Ansprüche, **dadurch gekennzeichnet, dass** zwischen die obere Druckplatte (3) und die Werkstücke (4, 5) eine strahldurchlässige elastische Kunststofffolie (14) als Ausgleichselement bei beweglich gelagerten Auflagesegmenten (8) oder starrer unterer Druckplatte eingelegt wird.

9. Vorrichtung zum Bearbeiten von Werkstücken mittels eines Laserstrahls mit einer Laserquelle (1), einer Auflage als untere Druckplatte (9) für die Werkstücke (4, 5) und einer strahldurchlässigen oberen Platte (3) auf den Werkstücken zum Fixieren der Werkstücke während der Bearbeitung, sowie eine Druckerzeugungseinrichtung (10), die auf mindestens eine der Druckplatten (3, 9) wirkt, **dadurch gekennzeichnet, dass** die untere Druckplatte (9) mehrere Werkstückauflagen zur Aufnahme der zu bearbeitenden Werkstücke aufweist, die in vertikaler Richtung relativ zu der unteren Druckplatte bewegbar sind und deren Abstand zu der oberen Druckplatte bei gleichem Anpressdruck variabel einstellbar ist.

10. Vorrichtung nach Anspruch 9, **dadurch gekennzeichnet, dass** die untere Druckplatte als mit Druckluft beaufschlagbare Druckkammer (15) mit einem oder mehreren in vertikaler Richtung beweglichen Werkstückauflagen (16, 18) ausgebildet ist.

11. Vorrichtung nach Anspruch 9, **dadurch gekennzeichnet, dass** die untere Druckplatte (9) einzelne, getrennt voneinander ansteuerbare Werkstückauflagen (12, 16, 18) aufweist.

12. Vorrichtung nach Anspruch 9, **dadurch gekennzeichnet, dass** die untere Druckplatte (9) einzelne federnd gelagerte Werkstückauflagen aufweist und die Druckplatte (9) in vertikaler Richtung bewegbar ist.

13. Vorrichtung nach einem oder mehreren der vorangegangen Ansprüche 9 bis 12, **dadurch gekennzeichnet, dass** mindestens zwei derartige untere Platten (9) vorgesehen sind, die abwechselnd mit der oberen Platte (3) in Druckkontakt bringbar sind.

14. Vorrichtung nach Anspruch 13, **dadurch gekennzeichnet, dass** die untere Platte (9) auf der Unterseite (23) eine Druckluftöffnung (22) aufweist, die mit einer entsprechenden Druckluftöffnung (24) in einer darunter angeordneten Grundplatte (21) fluchtet.

15. Vorrichtung nach Anspruch 14, **dadurch gekennzeichnet, dass** die Druckluftöffnung (22) in der unteren Platte (9) als eine Durchgangsbohrung und die Druckluftöffnung (24) in der Grundplatte als Bohrung mit einem Ansenkung (25) zur Aufnahme einer Dichtung (26) ausgebildet ist.

## Claims

1. A method for machining workpieces by means of a laser beam, the workpieces being fixed and subsequently exposed at least partially to a laser beam, wherein in a first operating step a plurality of workpieces (4, 5) to be machined are mounted on a lower pressure plate (9) having supporting segments (8) that can be moved in a vertical direction,
the top sides of the workpieces (4) are brought into contact in the second operating step with a beam-passing plate as upper pressure plate (3),
the upper and lower pressure plates are pressed together with a prescribed contact pressure, the spacing of the supporting segments (8) from the upper plate being set variably,
the workpieces (4, 5) to be machined are 'subsequently exposed to the laser beam (2) through the upper pressure plate (3) between the upper pressure plate (3) and the lower pressure plate (9).

2. The method as claimed in claim 1, wherein the workpiece supports are selectively pressed against the upper plate, and only these are exposed to the laser beam (2).

3. The method as claimed in one of the preceding claims, wherein the respective supporting segment (8, 8', 8") is pressed against the workpieces (4, 5) in a vertical direction in accordance with the desired contact pressure.

4. The method as claimed in one of the preceding claims, wherein use is made of supporting segments with individual segment regions (11, 12) which can be moved in a vertical direction and are pressed against the workpiece (4, 5) in accordance with a prescribable contact pressure.

5. The method as claimed in one of the preceding claims, wherein the respective supporting segment (8, 8', 8") is moved in a vertical direction with a first contact pressure until contact occurs with the upper pressure plate (3), and is pressed against the upper pressure plate (3), and then a second, substantially higher contact pressure is subsequently applied to it during the laser beam machining.

6. The method as claimed in one of the preceding claims, wherein, after the laser beam machining, the lower plate is exchanged for a second, already fitted lower plate.

7. Method as claimed in claims 5 and 6, wherein the lower plate is provided on the underside with a compressed-air connection and arranged on a base plate with a compressed-air counterpart and pressed against the base plate with the force that is produced by the second, substantially higher contact pressure against the upper pressure plate (3), and the compressed-air connection is thereby sealed.

8. The method as claimed in one of the preceding claims, wherein a beam-passing elastic plastic film (14) is inserted between the upper pressure plate (3) and the workpieces (4, 5) as compensating element in the case of moveably mounted supporting segments (8) or a rigid lower pressure plate.

9. A device for machining workpieces by means of a laser beam, having a laser source (1) a support as lower pressure plate (9) for the workpieces (4, 5), and a beam-passing upper plate (3) on the workpieces for fixing the workpieces during the machining, and also a pressure generator (10) which acts on at least one of the pressure plates (3, 9), wherein the lower pressure plate (9) has a plurality of workpiece supports for holding the workpieces to be machined, which can be moved in a vertical direction relative to the lower pressure plate and whose spacing from the upper pressure plate can be variably set for the same contact pressure.

10. The device as claimed in claim 9, wherein the lower pressure plate is designed as a pressure chamber (15) to which compressed air can be applied and which has one or more workpiece supports (16, 18) that can be moved in a vertical direction.

11. The device as claimed in claim 9, wherein the lower pressure plate (9) has individual workpiece supports (12, 16, 18) that can be driven separately from one another.

12. The device as claimed in claim 9, wherein the lower pressure plate (9) has individual resiliently mounted workpiece supports, and the pressure plate (9) can be moved in a vertical direction.

13. The device as claimed in one or more of the preceding claims 9 to 12, wherein at least two such lower plates (9) are provided which can be brought alternately into pressure contact with the upper plate (3).

14. The device as claimed in claim 13, wherein the lower plate (9) has on the underside (23) a compressed-air opening (22) that is flush with a corresponding compressed-air opening (24) in a base plate (21) arranged thereunder.

15. The device as claimed in claim 14, wherein the compressed-air opening (22) in the lower plate (9) is designed as a through bore, and the compressed-air opening (24) in the base plate is designed as a bore with a counterbore (25) for holding a seal (26).

## Revendications

1. Procédé pour traiter des pièces au moyen d'un rayon laser, les pièces étant immobilisées puis exposées au moins partiellement à un rayon laser, **caractérisé en ce que**
au cours d'une première étape de travail, plusieurs pièces (4, 5) à traiter sont placées sur une plaque de pression inférieure (9) dotée de segments d'appui (8) mobiles en direction verticale,
au cours de la deuxième étape de travail, les faces supérieures des pièces (4) sont amenées en contact avec une plaque laissant passer le rayon, comme plaque de pression supérieure (3),
les plaques de pression inférieure et supérieure sont pressées l'une contre l'autre avec une pression d'application prédéfinie, la distance entre les segments d'appui (8) et la plaque supérieure étant réglée d'une manière variable,
les pièces (4, 5) à traiter se trouvant entre la plaque de pression supérieure (3) et la plaque de pression inférieure (9) sont ensuite exposées au rayon laser (2) à travers la plaque de pression supérieure (3).

2. Procédé selon la revendication 1, **caractérisé en ce que** les appuis de pièces sont sélectivement pressés contre la plaque supérieure, et seuls ceux-ci sont exposés au rayon laser (2).

3. Procédé selon l'une des revendications précédentes, **caractérisé en ce que** le segment d'appui respectif (8, 8', 8")est pressé en direction verticale contre les pièces (4, 5) conformément à la pression d'application souhaitée.

4. Procédé selon l'une des revendications précédentes, **caractérisé en ce qu'**on utilise des segments d'appui avec des régions de segment individuelles (11, 12) mobiles en direction verticale, qui sont pressées contre les pièces (4, 5) conformément à une pression d'application prédéfinissable.

5. Procédé selon l'une des revendications précédentes, **caractérisé en ce que** le segment d'appui respectif (8, 8', 8") est, avec une première pression d'application, déplacé en direction verticale jusqu'au contact avec la plaque de pression supérieure (3) et pressé contre la plaque de pression supérieure (3), puis est sollicité, pendant le traitement au rayon laser, avec une deuxième pression d'application nettement supérieure.

6. Procédé selon l'une des revendications précédentes, **caractérisé en ce que**, à la suite du traitement au rayon laser, la plaque inférieure est remplacée par une deuxième plaque inférieure, déjà équipée de pièces.

7. Procédé selon les revendications 5 et 6, **caractérisé en ce que** la plaque inférieure est pourvue sur le dessous d'un raccord d'air comprimé et est disposée sur une plaque de base pourvue d'un raccord complémentaire d'air comprimé, et elle est pressée contre la plaque de base avec la force qui est produite par la deuxième pression d'application, nettement supérieure, contre la plaque de pression supérieure (3), de sorte que le raccordement d'air comprimé est étanché.

8. Procédé selon l'une des revendications précédentes, **caractérisé en ce qu'**une feuille élastique de matière plastique (14), laissant passer le rayon, est insérée entre la plaque de pression supérieure (3) et les pièces (4, 5) comme élément de compensation en présence de segments d'appui (8) montés à déplacement ou d'une plaque de pression inférieure rigide.

9. Dispositif pour traiter des pièces au moyen d'un rayon laser, avec une source laser (1), un appui sous forme de plaque de pression inférieure (9) pour les pièces (4, 5) et, au-dessus des pièces, une plaque supérieure (3) laissant passer le rayon, afin d'immobiliser les pièces pendant le traitement, ainsi qu'avec un équipement de production de pression (10) qui agit sur au moins une des plaques de pression (3, 9),
**caractérisé en ce que** la plaque de pression inférieure (9) présente plusieurs appuis de pièces pour recevoir les pièces à traiter, appuis qui sont mobiles en direction verticale par rapport à la plaque de pression inférieure et dont la distance par rapport à la plaque de pression supérieure est réglable d'une manière variable pour la même pression d'application.

10. Dispositif selon la revendication 9, **caractérisé en ce que** la plaque de pression inférieure est réalisée sous forme de chambre de pression (15) pouvant être alimentée en air comprimé et dotée d'un ou plusieurs appuis de pièces (16, 18) mobiles en direction verticale.

11. Dispositif selon la revendication 9, **caractérisé en ce que** la plaque de pression inférieure (9) présente des appuis de pièces individuels (12, 16, 18), pouvant être asservis séparément les uns des autres.

12. Dispositif selon la revendication 9, **caractérisé en ce que** la plaque de pression inférieure (9) présente des appuis de pièces individuels montés élastiquement, et la plaque de pression (9) est mobile en direction verticale.

13. Dispositif selon une ou plusieurs des revendications précédentes 9 à 12, **caractérisé en ce qu'**il est prévu au moins deux plaques inférieures (9) de ce type, qui peuvent être alternativement amenées en contact de pression avec la plaque supérieure (3).

14. Dispositif selon la revendication 13, **caractérisé en ce que** la plaque inférieure (9) présente sur le dessous (23) une ouverture (22) d'air comprimé, qui est alignée avec une ouverture correspondante (24) d'air comprimé dans une plaque de base (21) disposée en dessous.

15. Dispositif selon la revendication 14, **caractérisé en ce que** l'ouverture (22) d'air comprimé dans la plaque inférieure (9) est réalisée sous forme de perçage traversant, et l'ouverture (24) d'air comprimé dans la plaque de base sous forme de perçage pourvu d'un chanfreinage (25) pour recevoir un joint d'étanchéité (26).
